(19) Europäisches Patentamt
European Patent Office
Office européen des brevets

(11) **EP 2 283 308 B1**

(12) **EUROPÄISCHE PATENTSCHRIFT**

(45) Veröffentlichungstag und Bekanntmachung des Hinweises auf die Patenterteilung:
**16.12.2015 Patentblatt 2015/51**

(21) Anmeldenummer: **09749827.3**

(22) Anmeldetag: **19.05.2009**

(51) Int Cl.:
*G01B 11/02* (2006.01)   *G01B 11/30* (2006.01)
*F27B 21/00* (2006.01)

(86) Internationale Anmeldenummer:
**PCT/EP2009/056055**

(87) Internationale Veröffentlichungsnummer:
**WO 2009/141337 (26.11.2009 Gazette 2009/48)**

(54) **VERFAHREN UND VORRICHTUNG ZUR SINTERUNG EINES OBJEKTES UNTER BESTIMMUNG DES GEOMETRISCHEN OBERFLÄCHENPROFILS DES OBJEKTES**

METHOD AND DEVICE FOR SINTERING AN OBJECT WHILE DETERMINING THE GEOMETRIC SURFACE PROFILE OF THE OBJECT

PROCÉDÉ ET DISPOSITIF PERMETTANT DE FRITTER UN OBJET EN DÉTERMINANT LE PROFIL SURFACIQUE GÉOMÉTRIQUE DE L OBJET

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.05.2008 DE 102008024731**

(43) Veröffentlichungstag der Anmeldung:
**16.02.2011 Patentblatt 2011/07**

(60) Teilanmeldung:
**14154848.7 / 2 733 458**

(73) Patentinhaber:
• **BAM Bundesanstalt für Materialforschung und -prüfung
12205 Berlin (DE)**
• **Nokra Optische Prüftechnik und Automation GmbH
52499 Baesweiler (DE)**

(72) Erfinder:
• **MARZOK, Ulrich**
**13125 Berlin (DE)**
• **MÜLLER, Ralf**
**12559 Berlin (DE)**
• **SCHADRACK, Reinhard**
**12439 Berlin (DE)**
• **KRAUHAUSEN, Michael**
**52066 Aachen (DE)**

(74) Vertreter: **Zimmermann & Partner
Patentanwälte mbB
Postfach 330 920
80069 München (DE)**

(56) Entgegenhaltungen:
**EP-A- 0 506 005      DE-A1- 19 542 554
GB-A- 1 228 480      JP-A- H08 297 017
JP-A- 2001 099 615    US-A- 4 339 664
US-A- 4 588 297       US-A1- 2005 081 602**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Sinterung eines Objektes, insbesondere von keramischen oder pulvermetallurgischen Bauteilen. Insbesondere erfolgt die Sinterung unter zeitlich aufgelöster Erfassung von Oberflächendaten sowie optional mittels Temperaturmessung in einem Hochtemperaturofen auf Grundlage optischer Messmethoden. Speziell können die Lasertriangulation zur Bestimmung der Geometrie des Objektes und die Pyrometrie zur Bestimmung der Verteilung der Oberflächentemperatur verwendet werden.

Pulvermetallurgische und keramische Bauteile werden aus Ausgangspulvern zum großen Teil unter Zugabe von Wasser und organischen Hilfsstoffen geformt. Dabei kommen unterschiedlichste Formgebungsverfahren zum Einsatz. Nach dem Trocknen und Ausbrennen der Hilfsstoffe werden die porösen Formkörper, sogenannte Grünkörper, in einem anschließenden Brennprozess, dem Sintern, verdichtet und verfestigt.

Je nach gewähltem Formgebungsverfahren, zum Beispiel Spritzguss oder 3D-Printing, können Formen komplexer Geometrie sowie auch heterogen aufgebaute Bauteile, zum Beispiel keramische Multilayer Substrate mittels Tape Casting, Siebdruck- und Laminierverfahren, hergestellt werden. Die Sinterung von Bauteilen wird insbesondere für sehr harte, verschleißfeste und temperaturbeständige Materialien angewendet, da hier andere Formgebungsverfahren sehr teuer und aufwendig sind.

Die vielfältige Anwendung gesinterter Bauteile basiert neben ihren guten mechanischen und thermischen Eigenschaften auch auf der großen Vielfalt weiterer vorteilhafter Eigenschaften wie zum Beispiel der guten chemischen und Korrosionsbeständigkeit keramischer Werkstoffe, die auch eine gute Verträglichkeit mit lebendem Gewebe oder eine genau anpassbare Resorbierbarkeit von Knochenersatzmaterialien ermöglicht. Andere Anwendungen keramischer Werkstoffe resultieren aus ihren elektrischen Eigenschaften wie ihrer guten Isolation und speziellen ferro- oder dielektrischen Eigenschaften.

Die große Breite einstellbarer Gefüge bzw. Eigenschaftskombinationen, die erreichbaren komplexen Bauteilgeometrien und die guten Kombinationsmöglichkeiten mit anderen Werkstoffen haben dazu geführt, dass keramische Werkstoffe oft eine Schlüsselrolle bei der Entwicklung neuer Produkte haben. Neben den klassischen Anwendungen keramischer Bauteile zum Beispiel als Heizelement, Isolator, Kugellager und als Dichtung kommen zunehmend auch medizinische Anwendungen, zum Beispiel als Ersatz für Knochen, Zähne und Gelenke, sowie Anwendungen in der Mikrosystemtechnik zum Tragen, wo keramische Werkstoffe den Aufbau komplexer Mehrlagenverdrahtungsträger mit vielfältigen integrierten Funktionalitäten ermöglichen. Solche Bauteile werden zum Beispiel zunehmend in der Automobilindustrie, der Informations- und der Medizintechnik eingesetzt. Insbesondere die modernen innovativen Anwendungen keramischer Werkstoffe stellen jedoch höchste Ansprüche an ihre Zuverlässigkeit - also die Streubreite der gewünschten Eigenschaften - sowie an die Präzision der Bauteilgeometrie.

Bei gesinterten Bauteilen sind Form und Größe sowie die erreichbaren Werkstoffeigenschaften und ihre Streubreite, untrennbar mit den Verfahren zu ihrer Herstellung verbunden. Es ist daher für die Güte des Endproduktes entscheidend, diese Prozesse so präzise wie möglich zu steuern. Diese Steuerung ist damit eine wesentliche Voraussetzung für die Markteinführung keramischer Bauteile und beeinflusst den heutigen technologischen Fortschritt auf entscheidende Weise.

Insbesondere bei Grünkörpern inhomogener Porosität, komplexer Geometrie oder mit heterogenem stofflichen Aufbau kann es zu lokalen Unterschieden bei der Verdichtung kommen. Das gesinterte Bauteil weicht dann nicht nur bzgl. der Größe sondern auch hinsichtlich seiner Form vom Grünkörper ab. Um solche Effekte zu korrigieren, werden heute zunehmend 3D-Sintersimulationstools, z.B. auf Basis von Finite Elemente Methoden, eingesetzt, um das 3D-Sinterverhalten vorherzusagen. Die gewonnenen Erkenntnisse können dann zum Beispiel dazu genutzt werden, die Form des Grünkörpers so einzustellen, das das gesinterte Bauteil die gewünschte Form annimmt.

Daneben kann es bei Grünkörpern inhomogener Porosität, komplexer Geometrie oder mit heterogenem stofflichen Aufbau auch zu temporären lokalen Unterschieden bei der Verdichtung kommen, die nicht an der Form des gebrannten Bauteils erkennbar sein müssen. So kann es zum Beispiel beim Sintern eines mehrlagigen Folienverbundes durch den unterschiedlichen Schrumpf zu vorübergehenden Verbiegungen kommen. Solche temporären Verwerfungen während des Sinterns oder auch nur die Ausbildung von Spannungen im Sinterkörper können später Gefüge-Inhomogenitäten wie zum Beispiel die Bildung von Fehlstellen im gebrannten Bauteil verursachen und so zum Bruch oder zu anderweitigem Versagen des Bauteils führen.

Die steigenden Anforderungen an die Präzision und Zuverlässigkeit gesinterter Bauteile machen daher neuartige Methoden zur prozessintegrierten bzw. In-situ-Steuerung des Sinterprozesses dringend notwendig, die auch geringste und komplexe Formänderungen sowie lokale Temperaturunterschiede auf der Oberfläche während der Sinterung präzise, d.h. bis in den um-Bereich, erfassen können. Diese Informationen können dann zur Optimierung der Formkörperherstellung, zur Bewertung und Entwicklung von 3D-Sintersimulationstools oder zur Steuerung des Sinterprozesses selbst verwendet werden.

Im Regelfall laufen industrielle Sinterprozesse jedoch bislang ohne eine In-situ-Kontrolle der Schwindung ab, sie erfolgt nachträglich. Lediglich einzelne Messgrößen wie die Temperatur werden im Ofeninnenraum gemessen, ausgewertet oder als Steuergröße verwendet. Auch die Bewertung und Optimierung von 3D-Simulationstools, die ja den gesamten Sinterprozess vorhersagen können, basiert derzeit noch auf den messbaren Eigenschaften des fertig oder partiell gesinterten Bauteils.

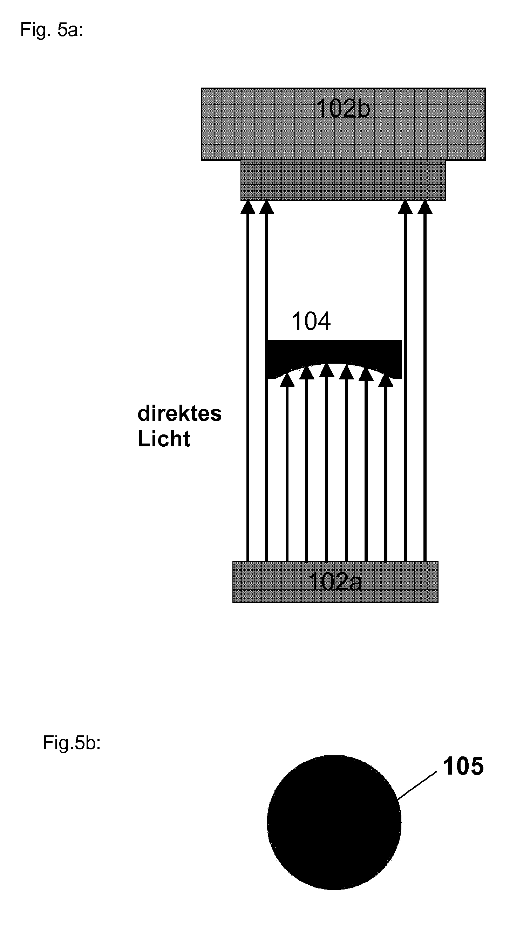

Zur In-situ-Kontrolle der Schwindung ist in der Forschung die Anwendung von optischen Schattenrissverfahren mittels Erhitzungsmikroskop und Bildauswertung bekannt, siehe zum Beispiel F. Raether, R. Springer, S.Beyer: Optical dilatometry for the control of microstructure development during sintering; Mat Res Innovat (2001) 4, p. 245-250. Fig. 5a zeigt das Prinzip des Schattenrissverfahrens des Standes der Technik. Eine Probe 104 mit einem beispielsweise kreisförmigen Querschnitt wird von einer Seite von einer Lichtquelle 102a bestrahlt. Im Beispiel weist die Probe 104 auf der der Lichtquelle 102a zugewandten Oberfläche eine mittige Vertiefung auf. Die Lichtquelle 102a bestrahlt die Probe 104 von einer Seite. Auf der dazu gegenüberliegenden Seite der Probe 104 ist eine CCD-Kamera als Detektor 102b angeordnet. Sie empfängt das an der Probe vorbeigehende Licht der Lichtquelle 104. Dort, wo die Probe 104 den Strahlengang zwischen Lichtquelle 102a und Detektor 102b blockiert entsteht ein Schatten der Probe 104 auf der CCD-Kamera 102b. Im Ergebnis, wie in Fig. 5b gezeigt, wird die Grundform der Probe 104 als Schattenriss erhalten. Im Beispiel ist dies lediglich ein undifferenzierter Kreis ohne Information über die Vertiefung der Oberfläche der Probe 104. Durch Schattenrissverfahren können lediglich zweidimensionale Schwindungsmessungen an kleinen, einfachen und insbesondere konvex gekrümmten Proben, z. B. einem 30 mm hohen Zylinder mit einem Durchmesser von 11 mm, durchgeführt werden, wo der Schattenumriss hinreichende Informationen zur Probengestalt liefern kann. Da der Schattenriss die Projektion der Hell-Dunkel-Grenzlinie des Objektes auf die Beobachtungsebene darstellt, enthält er keine Information über den Abstand dieser Linie und so über den tatsächlichen räumlichen Verlauf und die Länge dieser Grenzlinie. Nur bei regelmäßig geformten Objekten und genau definierten Abbildungsverhältnissen, wie z.B. einer Kugel, kann indirekt aus dem Schattenriss auf das tatsächliche Oberflächenprofil des Objektes und seine räumliche Gestalt geschlossen werden. Der Begriff "indirekt" deutet hierbei an, dass bei diesem Verfahren Annahmen zur Objektgestalt gemacht werden müssen. Die Beschreibung unregelmäßiger Formänderungen, zum Beispiel die komplexen Verwerfungen großformatiger sinternder Folien, z.B. im Format 8"x8", ist mit dem Schattenrissverfahren nicht möglich.

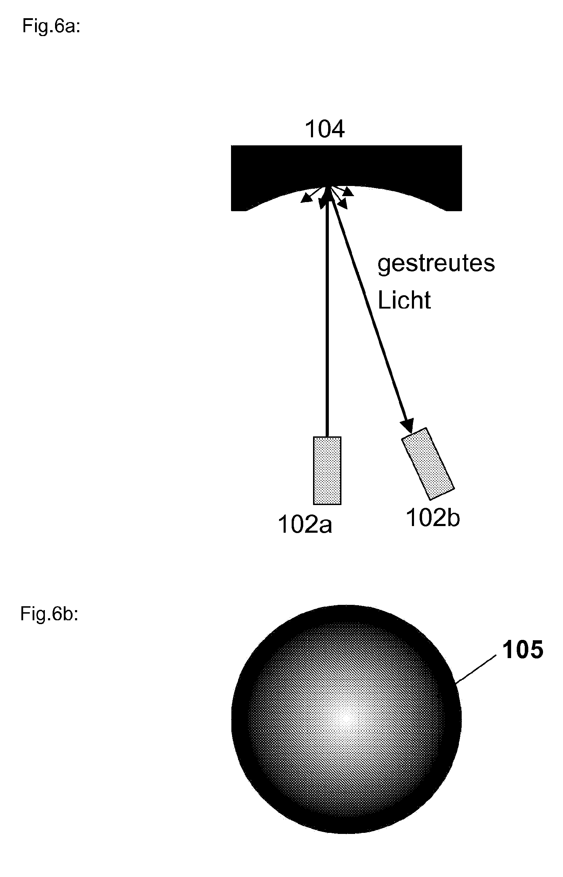

Im Zusammenhang mit anderen technischen, außerhalb der Sintertechnologie gelegenen Aufgabenstellungen sind berührungslose optische Verfahren zur In-situ-Erfassung der dreidimensionalen Geometrie von Körpern auch bei hohen Temperaturen bekannt. Diese beruhen auf dem Verfahren der Triangulation. Dabei wird meist ein Laser als Lichtquelle verwendet. Ein elektronischer Bildwandler, zumeist eine CCD-Kamera, registriert dann das gestreute Licht. Fig. 6a zeigt ein Beispiel für das Prinzip der Messung des gestreuten bzw. rückgestreuten Lichts. Wiederum wird eine kreisförmige Probe 104 mit einer Vertiefung in ihrer Oberfläche wie in Fig. 5a von einer Seite mit einer Lichtquelle 102a bestrahlt. Im Gegensatz zum Schattenrissverfahren sind nun Lichtquelle 102a und Detektor 102b auf der gleichen Seite der Probe 104 angeordnet, mit einem gewissen Abstand und/oder Winkel zueinander. Licht trifft auf die Probe 104, wird rückgestreut und gelangt in den Detektor 102b. Aus der Intensität des detektierten (rück-)gestreuten Lichts kann nun ein Oberflächenprofil der Probe 104 erstellt werden. Dies ist in Fig. 6b gezeigt und beinhaltet Informationen über die differenzierte Struktur der Oberfläche der Probe 104 mit Vertiefung.

US 4 588 297 A beschreibt ein Verfahren, wie in einem Hochofen der Füllstand des für die Schmelze zugeführten Schüttgutes mittels Triangulation bestimmt werden kann. Der Füllstand wird dabei mittels Pulsung eines Laserstrahls auf der Oberfläche bestimmt, während der Winkel des Emitters zur Oberfläche inkrementell entlang eines vorgegebenen Weges verändert wird. Das Streulicht wird dann mittels eines Detektors mit einem kleinen Öffnungswinkel gemessen. Detektor und Emitter sind dabei mit einem festen Abstand angeordnet. Punkte entlang des Profils werden von den Abstrahl- und Empfangswinkeln und der bekannten Distanz zwischen Emitter und Detektor bestimmt. Dazu befinden sich Laser und Lichtreceiver außerhalb des Ofens vor Beobachtungsfenstern. Da Laser und Receiver keine starr verbundene Einheit bilden, sondern getrennt am Ofen angebracht sind und der Einfallswinkel des Laserstrahls zur Bestimmung eines Profils in kleinen Winkelschritten bei der Messung verstellt wird, ist die Kalibrierung dieser Anordnung schwierig und außerdem sehr störanfällig, beispielsweise allein durch die thermische Ausdehnung mechanischer Komponenten der Sensorbefestigung während des Heizens. Dementsprechend ist die Messgenauigkeit der Anordnung sehr begrenzt.

JP 2001-099615 beschreibt einen wassergekühlten, mit grünem Laserlicht arbeitenden Triangulationssensor, der direkt in einem Hochtemperaturofen angeordnet ist. Als eine Anwendung wird die Messung der Oberfläche von eingeschüttetem Müllverbrennungsmaterial genannt. Verstellbare Parameter bei diesem Sensor sind, um die sichtbare Oberfläche eines Objektes messen zu können, die Neigung des Laserstrahls und die Neigung der optischen Achse des optischen Empfängers zu einer festen Koordinatenachse. Aus diesen variablen Stellwinkeln, den anderen festen geometrisch-optischen Parametern der Anordnung und den Bildkoordinaten der Abbildung des Laserflecks in der CCD-Kamera werden in einer Auswerteeinheit für jede Winkelstellung die 3D-Koordinaten des vom Laser angestrahlten Punktes der Objektoberfläche bestimmt. Allerdings existieren strenge physikalische Auflösungsgrenzen, die bei diskretem Kamerachip mit dem Abstand zwischen Messobjekt und Kamera und dem Winkel zwischen dem einfallenden Laserstrahl und der optischen Achse der Kamera zusammenhängen. Die diesem Verfahren eigene ständige Nachführung der Winkelstellungen zieht unterschiedliche Auflösungen nach sich und ist somit für hohe Genauigkeiten im μm-Bereich nicht geeignet. Bei dieser Anordnung und auch bei der zuerst genannten Messung in einem Hochofen wirkt sich außerdem der große Abstand zwischen der zu vermessenden Oberfläche und dem Detektor nachteilig auf die Genauigkeit aus.

Bei Raumtemperatur sind Anordnungen bekannt, bei denen gleichzeitig das Messobjekt gedreht und der optische Sensor linear über dem Messobjekt verschoben wird. So beschreibt US 5 270 560 A ein Verfahren, das zur Vermessung von Halbleiterwafern mit einem Lasersensor verwendet werden kann. DE 195 04 126 A1 beschreibt ein Verfahren zum Vermessen dreidimensionaler Objekte mit der optischen Triangulation, das bei der Schuhleistenvermessung, im Formenbau sowie bei orthopädischen, dentaltechnischen und archäologischen Anwendungen eingesetzt werden kann.

Die Druckschrift US 4 339 664 A beschreibt ein Verfahren und eine Vorrichtung zur Registrierung der Topographie der Beschickungsmasse in einem Hochofen, basierend auf dem Phasenvergleich reflektierter und eingestrahlter Lichtstrahlen.

Die Druckschrift EP 0 506 005 A2 beschreibt eine Messvorrichtung für den physischen Zustand eines Körpers, wobei der vertikale Abstand einer auf der Oberfläche des Körpers aufsitzenden Messsonde und die Gewichtsänderung des Körpers simultan erfasst werden.

Die Druckschrift US 2005 / 0 081 602 A1 beschreibt, basierend auf der mechanischen Erfassung einer Längenänderung, ein Verfahren und eine Messvorrichtung für die kontinuierliche Erfassung einer während der thermo-chemischen Behandlung eines metallischen Werkstücks aus der Gasatmosphäre abgegebenen und vom metallischen Werkstück absorbierten Komponente.

Die Druckschrift GB 1 228 480 A beschreibt ein Verfahren zum Sintern von Möller, insbesondere ein Verfahren zur Bestimmung der Temperatur eines eine Sintermaschine verlassenden Sinterkuchens.

Die Druckschrift JP 8 297017 A beschreibt eine Vorrichtung zur Messung einer Oberflächenform mittels Laser-Triangulation. Die Druckschrift DE 195 42 554 A1 beschreibt ein Verfahren zur Prüfung von Schweißnähten mittels Laser-Triangulation.

Die Druckschrift JP 2001099615 A beschreibt ein Lasertriangulationsverfahren in einem Hochtemperaturofen, wobei mit einem grünen oder blauen Laser gemessen wird.

Jedoch gibt es bisher keine Möglichkeit zur direkten und hinreichend genauen quantitativen Erfassung von zwei- oder dreidimensionalen Oberflächenprofilen des Objektes und diesbezüglicher Änderungen während des Sinterprozesses bei hohen Temperaturen. Für die Kontrolle und Steuerung der Sinterung keramischer und pulvermetallurgischer Bauteile in einem Hochtemperaturofen gibt es noch kein Verfahren, das eine direkt zwei- oder dreidimensionale Formerkennung und Formanalyse während des Heizprozesses beinhaltet.

Daher ist es Aufgabe der Erfindung, eine Vorrichtung und ein Verfahren zur Sinterung keramischer und pulvermetallurgischer Bauteile anzugeben, mit der genaue Messungen von Oberflächenprofilen von sinternden Objekten durchgeführt werden können, bei denen die thermischen Verhältnisse im Ofen nur minimal beeinflusst werden.

Die Erfindung betrifft ein Verfahren und eine Anordnung zur Sinterung von Bauteilen, das auf der zeitlich aufgelösten Messung von Oberflächenprofilen bzw. daraus abgeleiteter Formmerkmalen beruht, welche aus dem direkt von der Probe gestreuten Licht gewonnen werden. Demzufolge kann während der Sinterung jeder Oberflächenpunkt in seiner Lage und seiner Temperatur vermessen werden und durch aufeinander folgende Messungen eine Veränderung festgestellt werden. Optional kann ferner die Temperatur der Oberfläche bestimmt werden. Die gemessene Veränderung erlaubt zudem eine Steuerung des Sinterregimes und/oder des zeitlichen Verlaufs der Temperaturverteilung über die gezielte Ansteuerung verschiedener Heizzonen.

Es wird demzufolge ein Verfahren gemäß Anspruch 1 zur Sinterung eines Objektes vorgeschlagen.

Während des Erstellens des geometrischen Oberflächenprofils kann optional gleichzeitig das thermische Oberflächenprofil mindestens eines Teilbereiches des Objektes bestimmt.

Ferner können Sinterparameter auf Basis der erhaltenen geometrischen und/oder thermischen Oberflächenprofile des Objektes gesteuert werden.

Unter geometrischen Oberflächenprofil werden im Folgenden zwei- oder dreidimensionalen Daten der Geometrie oder der Form der Oberfläche verstanden.

Die optische Lasertriangulation wird zur Bestimmung der Geometrie eingesetzt und bevorzugt wird die Pyrometrie zur Bestimmung der Verteilung der Oberflächentemperatur eingesetzt, d.h. das Strahlungsthermometer ist bevorzugt ein optisches Pyrometer. Das zu sinternde Objekt ist bevorzugt ein keramisches oder pulvermetallurgisches Objekt.

Die Menge der Sinterparameter umfasst: die lokale und globale Temperatur im Ofen, die globale Heizrate im gesamten Ofen, die lokale Heizrate einzelner Heizzonen im Ofen und die Zeitdauer einzelner Sinterungsschritte.

Eine Steuer- und Auswerteeinheit berechnet bevorzugt aus den gemessenen geometrischen und/oder thermischen Daten das geometrische und/oder thermische Oberflächenprofil des Objektes.

Zwischen aufeinander folgenden Bestimmungen des geometrischen und/oder thermischen Oberflächenprofils mindestens eines Teilbereiches des Objektes werden bevorzugt Veränderungen zwischen der Oberflächenprofilen bestimmt, auf deren Basis Sinterparameter gesteuert werden. Dies ermöglicht die Feststellung von Unregelmäßigkeiten während der Sinterung und ein darauf durchgeführtes Anpassen der Sinterparameter oder einen Abbruch des Verfahrens. Die geometrischen Veränderungen umfassen vorteilhafterweise Schwindungen bzw. Schrumpfungen, die bei der Sinterung oft auftreten. Die Schwindungen des Objektes können aus der Verfolgung und Abstandsbestimmung zwischen vorbestimmten Punkten des Objektes aus zeitlich nacheinander erfolgenden Erfassungen des geometrischen Oberflächenprofils bestimmt werden.

Ferner kann das Verfahren umfassen: Bestimmung von Kenngrößen zur Formerkennung und Temperaturverteilung aus den gemessenen geometrischen und thermischen Oberflächenprofilen des Objektes, Durchführung eines Soll/Ist-Vergleiches der gemessenen Werte der Kenngrößen mit vorbestimmten Werten; Korrektur der Sinterparameter, wenn eine Abweichung der gemessenen Werte der Kenngrößen von vorbestimmten Werten größer ist als ein erster vordefinierten Schwellenwert; Fortführung der Bestimmung der geometrischen und thermischen Oberflächenprofile des Objektes und der Kenngrößen solange der Sinterungsprozess noch nicht abgeschlossen ist. Es kann auch ein Abbruch des Sintervorganges bei einer Abweichung der gemessenen Werte der Kenngrößen von vorbestimmten Werten, die größer ist als ein zweiter vordefinierten Schwellenwert, vorgesehen sein. Die Kenngrößen umfassen verschiedene Schwindungsmaße, wie z.B. die laterale und axiale Schwindung, geometrische Abweichungen und Temperaturunterschiede. Die Kenngrößen können die kleinsten und die größten gemessenen Temperaturwerte umfassen.

Der Winkel zwischen Lichtquelle und Detektor ist bevorzugt konstant, wodurch eine sehr genaue Messung erreicht wird.

Erfindungsgemäß werden Lichtquelle und Detektor und bevorzugt das Strahlungsthermometer über das Objekt bewegt. Noch bevorzugter werden Strahlungsthermometer sowie Lichtquelle und Detektor zusammen über das Objekt bewegt. Das Verfahren läuft bevorzugt derart ab, dass zunächst das Erstellen des geometrischen und/oder des thermischen Oberflächenprofils durch einen Spalt in der Wandung des Ofens erfolgt. Strahlungsthermometer, Lichtquelle und Detektor werden in lateraler Richtung entlang des Spaltes über das Objekt geführt. Gleichzeitig wird das Objekt im Ofen gedreht, wobei lineare und rotierende Bewegung synchronisiert erfolgen. Die lineare Bewegung kann durch ein Mittel zur linearen Positionierung erfolgen, welches entlang des Spaltes verschiebbar ausgebildet ist und an dem Lichtquelle, Detektor und Strahlungsthermometer in Bewegungsrichtung hintereinander angeordnet sind. Die rotierende Bewegung kann mittels eines Drehtellers erfolgen, auf dem das Objekt angeordnet ist. Ein Translationsschritt entlang des Spaltes erfolgt bevorzugt nach einer vollständigen Rotation des Objektes. Lichtquelle, Detektor und Strahlungsthermometer können bevorzugt von einem äußeren Punkt des Drehtellers bis zum Rotationsmittelpunkt des Drehtellers bewegt werden. Dies ermöglicht die Neujustierung des Nullpunktes der Messung in z-Richtung, da auch die Oberfläche des Drehtellers mit vermessen wird.

Lichtquelle und Detektor sind erfindungsgemäß durch einen Lasertriangulationssensor realisiert, der einen Laserlichtpunkt auf die Oberfläche des Objektes abbildet und das von dem Punkt gestreute Licht in einem positionsempfindlichen Detektor detektiert.

In einem anderen Beispiel, das aber nicht zur Erfindung gehört, kann der Schritt des Bestrahlens mit Licht ferner ein Aufweiten des Lichtstrahls der Lichtquelle zu einer Linie umfassen. Dadurch kann die lineare Bewegung entlang des Spaltes entfallen.

Ferner kann in einem anderen Ausführungsbeispiel die Lichtquelle ein Projektor sein, der ein zweidimensionales Muster auf die Oberfläche des Objektes projiziert. Der Detektor kann durch mindestens eine Kamera realisiert sein, die das projizierte Muster aufnimmt. Das Verfahren umfasst dann ferner den Schritt des Bestimmens der Differenz zwischen projizierten und aufgenommenen Mustern.

Erfindungsgemäß ist ferner eine Vorrichtung gemäß Anspruch 13 zur Sinterung eines Objektes angegeben.

Ferner kann optional ein Mittel zur Bestimmung des thermischen Oberflächenprofils mindestens eines Teilbereiches des Objektes im Ofen vorgesehen sein. Bevorzugt ist das Mittel zur Bestimmung des thermischen Oberflächenprofils ein Strahlungsthermometer.

Ferner kann in einem weiteren Ausführungsbeispiel eine Auswerte- und Steuereinheit zur Auswertung der gemessenen geometrischen vorgesehen sein. Bevorzugt dient die Auswerte- und Steuereinheit auch zur Steuerung von Sinterparametern auf Basis dieser geometrischen und thermischen Daten.

Das Objekt ist bevorzugt ein keramisches oder pulvermetallurgisches Objekt.

Die Menge der steuerbaren Sinterparameter kann die lokale und globale Temperatur im Ofen, die globale Heizrate im gesamten Ofen, die lokale Heizrate einzelner Heizzonen im Ofen, und die Zeitdauer einzelner Sinterungsschritte umfassen.

Die Steuer- und Auswerteeinheit kann Schwindungsmaße, geometrische Abweichungen und/oder Temperaturunterschiede bestimmen, in deren Abhängigkeit die Sinterung gesteuert wird.

Der Winkel zwischen Lichtstrahl der Lichtquelle und optischer Achse des Lichtdetektors kann konstant sein, wodurch eine hohe Genauigkeit erreicht werden kann.

Das Strahlungsthermometer kann ein optisches Pyrometer sein.

Die Öffnung kann ein Spalt sein, Strahlungsthermometer, Lichtquelle und Detektor können an einem Mittel zur linearen Positionierung entlang des Spaltes verschiebbar angeordnet sein und im Ofen kann ein Mittel zur Rotation des Objektes derart ausgebildet sein, dass die Bewegung von Mittel zur linearen Positionierung und Mittel zur Rotation des Objektes synchronisiert erfolgt. Strahlungsthermometer, Lichtquelle und Detektor können in Bewegungsrichtung hintereinander am Mittel zur linearen Positionierung angeordnet sein. Das Mittel zur Rotation des Objektes kann ein mit Motor angetriebener Drehteller sein. Der Spalt kann mit einer temperaturbeständigen Scheibe abgedeckt sein, die das Licht der Lichtquelle ungehindert passieren lässt und für das Strahlungsthermometer transparent ist.

Erfindungsgemäß sind Lichtquelle und Detektor durch einen Lasertriangulationssensor realisiert, wobei die Strahlungsintensität des Lasers die des Objektes während der Sinterung übertrifft.

Beispielsweise kann die Lichtquelle ein Projektor sein, der ein zweidimensionales Muster auf die Oberfläche des Objektes projiziert und der Detektor kann mindestens eine Kamera sein, die das projizierte Muster aufnimmt.

In einem Beispiel, das aber nicht zur Erfindung gehört, kann ein Lichtstrahl der Lichtquelle zu einer Linie aufgeweitet sein und Lichtquelle und Detektor als Lichtschnittsensor ausgebildet sein.

Die hohe Genauigkeit der Bestimmung des Oberflächenprofils wird durch einen kleinen Messfleck der Laserlichtquelle und einen kleinen Abstandsmessbereich - beides verbunden mit einer gewissen Nähe des Sensors zur Probe - sowie die Synchronisation der Relativbewegung zur Probe erreicht. Der Triangulationssensor wird direkt über dem Spalt in der Wandung des Ofens angeordnet.

Hauptanwendung sind zunächst Multilayer-Substrate aus Folien, an denen die Vorteile eines kontrollierten Sinterns nachgewiesen werden sollen.

Mit dem Verfahren und der Messanordnung kann erstmals ein Sinterprozess keramischer Bauteile unmittelbar verfolgt, kontrolliert und gesteuert werden. Dazu werden über die gesamte Prozessdauer die 3D-Daten und die Temperaturverteilung der Objektoberfläche aufgezeichnet. Eine spezielle Lösung dieser Aufgabe besteht darin, dass mit einem außerhalb des Ofens über einem sehr schmalen Spalt in der Ofendecke angeordneten Laser-Wegsensor oder Lasertriangulationssensor das Profil eines im Ofeninnenraum auf einem Drehteller befindlichen keramischen Messobjektes gemessen wird. Dieser Ansatz erfüllt vorteilhafterweise weitgehend die thermischen Anforderungen der Messaufgabe und ermöglicht eine große Messfläche bei einer sehr kleinen Sichtfläche.

Es werden sofort Fehlerereignisse, wie zum Beispiel die Verformung des Bauteils oder zu große Temperaturdifferenzen, erkannt. Der Sinterprozess kann in diesem Fall abgebrochen oder verlangsamt werden. Durch die permanente Aufzeichnung der Geometrie- und Temperaturdaten kann man zudem Rückschlüsse auf Fehlerursachen ziehen und somit den Ablauf des Sinterprozesses aber auch die vorangehende Herstellungstechnologie verbessern.

Aus den Geometriedaten werden dem Ofenbetreiber und Bauteilhersteller interessierende Schwindungsparameter - bei dünnen keramischen Folien die laterale und axiale Schwindungen - bereitgestellt. Damit lässt sich insbesondere die Heizungssteuerung in kritischen Temperaturbereichen optimieren.

Im Folgenden wird die Erfindung anhand von Ausführungsbeispielen unter Verwendung von Zeichnungen näher illustriert.

Es zeigen:

Fig. 1:   Ein erfindungsgemäßes Ausführungsbeispiel der Vorrichtung zur Sinterung mittels 3D-Formerkennung und pyrometrischer Messung der Temperaturverteilung auf der Oberfläche des zu sinternden Objektes;

Fig. 2:   Eine schematische Darstellung eines Ausführungsbeispiels der Bestimmung der lateralen Schwindung von Folien;

Fig. 3:   Eine schematische Darstellung eines Ausführungsbeispiels der Bestimmung der axialen Schwindung;

Fig. 4:   Ein Ausführungsbeispiel eines erfindungsgemäßen Verfahrens zur Steuerung der Sinterung mittels 3D-Formerkennung und pyrometrischer Messung der Temperaturverteilung auf der Oberfläche des zu sinternden Objektes;

Fig. 5:   Prinzip des Schattenrissverfahrens des Standes der Technik (Fig. 5a: Aufbau; Fig. 5b: Messergebnis);

Fig. 6   Prinzip des Streulichtverfahrens des Standes der Technik (Fig. 6a: Aufbau; Fig. 6b: Messergebnis);

Der im folgende verwandte Begriff "geometrisches Oberflächenprofil" wird in Folgenden verwandt für zwei- oder dreidimensionale Daten der Oberfläche des Objektes. Es wird demnach die Form der Oberfläche oder mit anderen Worten, die räumliche Gestalt der Oberfläche durch diese Daten repräsentiert. Zum Beispiel können Oberflächendaten des Objektes entlang einer Linie oder aber die komplette dreidimensionale Oberflächenform des Objektes darunter fallen. Im zweidimensionalen Fall gibt das geometrische Oberflächenprofil beispielsweise die Abhängigkeit einer Höhen- oder Abstandskoordinate z von einer räumlichen Koordinate x an, also $z(x)$ und im dreidimensionalen Falle die Form der Oberfläche z als eine Funktion zweier räumlicher Koordinaten, also z.B. $z(x,y)$. Im Folgenden sollen in diesem Zusammenhang verkürzt der Begriff "geometrisches Oberflächenprofil" oder "Geometrie der Oberfläche" verwandt werden.

Im Gegensatz dazu gibt das thermische Oberflächeprofil zusätzlich eine Temperaturinformation über das jeweilige geometrische Oberflächenprofil.

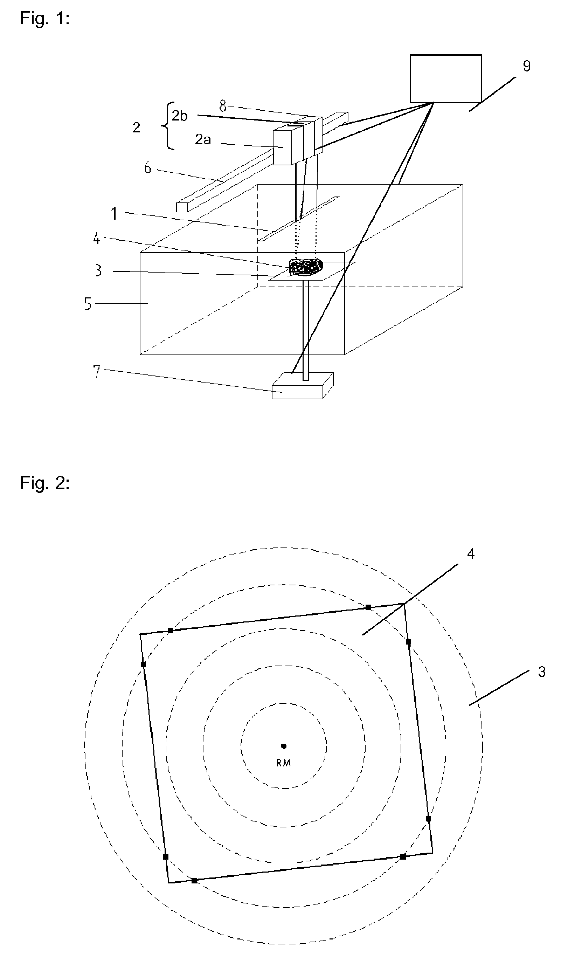

Fig. 1 zeigt ein Ausführungsbeispiel einer erfindungsgemäßen Vorrichtung zur Sinterung von Objekten 4, bevorzugt keramische oder pulvermetallurgische Objekte 4.

Sintern ist ein Prozess des Brennens und Konsolidierens von Körpern, die aus Pulverpartikeln geformt wurden. Die Sinterung wird sehr häufig von einer Schrumpfung begleitet. Die Pulver können sein: (a) *oxidische Pulver,* wie z.B. $Al_2O_3$ für Natriumdampflampen, $ZrO_2$ für bruchzähe Strukturkeramik, Gassensoren, $BaTiO_3$ für Kondensator- und Thermistorkeramik, $3Al_2O_3$-$SiO_2$ + $SiO_2$ + $K_2O·3Al_2O_3·SiO_2$ + Silikatglas für Porzellan; (b) *nichtoxidische Pulver,* wie z.B. SiC für hochfeste Strukturkeramik, $Si_3N_4$ für hochfeste und bruchzähe Strukturkeramik; oder (c) *metallische Pulver,* wie z.B. WC + Co oder TiN, TiC + Ni, Co, Mo für Hartmetallbohrer oder Hartmetallwendeschneidplatten. Die vorliegende Anmeldung ist nicht auf die angegebenen Beispiele für keramische oder pulvermetallurgische Materialien beschränkt.

Die Vorrichtung zum Sintern gemäß dem ersten Ausführungsbeispiel umfasst einen Hochtemperaturofen 5, in dessen Wandung an einer Seite, bevorzugt der oberen Seite, eine Öffnung, bevorzugt ein Spalt oder Schlitz 1, eingebracht ist. Im Inneren des Ofens 5 befindet sich eine Aufnahme des zu sinternden Objektes 4, bevorzugt ein Teller 3. Der Teller 3 ist optional als ein Drehteller ausgebildet, auf dem die zu sinternde Probe 4 angeordnet wird. Der Drehteller 3 ist dann mit einem externen Antrieb 7 versehen.

Über der Öffnung 1, bevorzugt aber nicht beschränkend dem Spalt 1, befindet sich eine Lichtquelle 2a und ein Lichtdetektor 2b zur Messung des von dem Objekt 4 gestreuten Lichtes und zur Abstandsbestimmung zur Oberfläche des Objektes 4. Lichtquelle 2a und Lichtdetektor 2b sind auf derselben Seite der Probe derart angeordnet, dass das direkt von der Objektoberfläche der Probe 4 zurückgestreute Licht der Lichtquelle 2a in den Detektor 2b fällt und somit Streulicht zur Bestimmung des Oberflächenprofils gemessen wird. Für den Begriff "rückgestreutes" Licht wird im folgenden vereinfacht "gestreutes" Licht verwendet. Bevorzugt werden Lichtquelle 2a und Detektor 2b oberhalb derselben Öffnung in einer Wandung des Ofens 5 angeordnet. Weiter bevorzugt sind Lichtquelle 2a und Detektor 2b auf einer Linie oder einem Kreisbogen oberhalb der Probe angeordnet. Die Lichtquelle 2a und der Detektor 2b sind erfindungsgemäß durch einen Lasertriangulationssensor 2 realisiert. Der Triangulationssensor 2 ist mit einem Mittel zur linearen Positionierung, der Mikropositioniereinheit 6 verbunden. Optional ist in einem bevorzugten Ausführungsbeispiel auch ein Mittel 8 zur Bestimmung der Temperatur mindestens eines Teilbereiches der Oberfläche angeordnet. Dieses ist bevorzugt ein optisches Strahlungsthermometer oder optisches Pyrometer. Das Strahlungs

thermometer 8 kann dann auch bevorzugt an dem Mittel 6 zur linearen Positionierung befestigt sein.

Die kombinierte Verwendung von Lasertriangulationssensor 2 und Mittel zur linearen Positionierung 6 ermöglicht die Messung eines geometrischen Oberflächenprofils des Objektes 4, der zwei- oder dreidimensionalen Koordinaten der Oberflächenpunkte des Objektes 4. Bevorzugt aber nicht beschränkend sind Triangulationssensor 2 und Strahlungsthermometer 8 in Reihe an der Mikropositioniereinheit 6 angeordnet, noch bevorzugter direkt an- und hintereinander, damit eine Messung der Temperatur des triangulierten Oberflächenpunktes des keramischen oder pulvermetallurgischen Objektes oder Probe 4 vorgenommen werden kann.

Die Mikropositioniereinheit 6 ist dabei so am Spalt 1 des Ofens 5 angeordnet, dass Triangulationssensor 2 und optional Strahlungsthermometer 8 über den Spalt zur vollständigen Vermessung der keramischen Probe 4 auf dem Drehteller 3 geführt werden können, also entlang seiner lateralen Ausdehnung. Mit anderen Worten, das Abtasten der Probe 4 erfolgt in Richtung des Spaltes 1, die Mikropositioniereinheit 6 erstreckt sich entlang des Spaltes 1 und bewegt Triangulationssensor 2 und optional das Strahlungsthermometer 8 über den Spalt 1 und somit die Probe 4.

Der Spalt 1 in der Wandung des Ofens 5, bevorzugt in der Decke des Ofens 5, sollte, um thermische Probleme klein zu halten, möglichst schmal sein. Die Spaltdicke ist dabei bevorzugt kleiner gleich 5 mm. In seiner Länge entspricht der Spalt 1 mindestens der gesamten Länge der lateralen Ausdehnung des Objektes 4, bevorzugter mindestens der halben Länge der lateralen Ausdehnung. Der Spalt 1 ist so auszubilden, dass Strahlengänge von Triangulationssensor 2 und Pyrometer 8 den Spalt ohne Störung passieren können.

Bevorzugt kann die Öffnung 1 zur weiteren thermischen Abschirmung mit einer Quarzglasscheibe abgedeckt, die den vorkommenden Temperaturen standhält und gleichzeitig das Laserlicht für die Triangulation und die Wellenlänge für die pyrometrische Messung hindurchlässt. Der Öffnung 1 kann aber auch oval oder in anderer Form ausgebildet sein. Es muss nur sichergestellt sein, dass das Objekt 4 vermessen werden kann und dass die Querschnittsfläche der Öffnung 1 klein gegenüber der Oberfläche des Ofens 5 ist, damit die Temperatur im Ofen 5 regelbar bleibt und eine homogene Temperaturverteilung erreicht wird.

An der erfindungsgemäßen Vorrichtung ist ein Mittel zur Synchronisation von Rotationsbewegung des Drehtellers 3 und Translationsbewegung des Triangulationssensors 2 und des Strahlungsthermometers 8 vorgesehen. Dies kann ein mechanisches Mittel sein, ist aber bevorzugt durch eine Steuer- und Auswerteeinrichtung 9 realisiert. Die Steuer- und Auswerteeinheit 9 ist dabei mit dem Mittel zur Positionierung 6, dem Drehteller 3 bzw. seinem Antrieb 7, dem Lasertriangulationssensor 2 und dem Strahlungsthermometer 8 verbunden. In einer bevorzugten Ausgestaltung ist die Steuer- und Auswer

teeinheit 9 ferner auch mit der Ofensteuerung des Ofens 5 verbunden. Damit kann der zeitliche Temperaturverlauf und die Höhe der Temperatur gesteuert werden, wie weiter unten näher erläutert wird. Ferner wertet die Steuer- und Auswerteeinheit 9 die gemessenen Daten des Triangulationssensors 2 und des Strahlungsthermometers 8 aus und erstellt ein dreidimensionales Oberflächenprofil des keramischen oder pulvermetallurgischen Objektes 4 sowie ein Temperaturoberflächenprofil des keramischen oder pulvermetallurgischen Objektes 4.

Der Drehtisch mit Drehteller 3 ist bevorzugt aus temperaturfestem Material gefertigt, das sich nicht verformt, wobei der Drehteller 3 eben ausgebildet ist.

Der Lasertriangulationssensor 2 zeichnet sich neben seiner Präzision durch eine Laserintensität aus, die die Strahlungsintensität glühender Keramik übertrifft, damit er im Detektor 2b detektiert werden kann. Er ist somit für die Messung auch an heißen Keramikoberflächen geeignet. Der Laserstrahl und die optische Achse der Kamera bilden dabei bevorzugt einen konstanten Winkel. Durch die feste Winkeleinstellung erhält man vorteilhafterweise annähernd gleiche Messbedingungen für Abstände innerhalb des Messbereiches und einen Genauigkeitsvorteil gegenüber den zum Stand der Technik genannten Triangulationslösungen.

Die Bildebene des Triangulationssensors 2, der Kamerachip, ist dabei bevorzugt entsprechend der Scheimpflugbedingung angeordnet, so dass innerhalb des Messbereiches der Laserfleck scharf abgebildet wird. Die Scheimpflugsche Regel besagt, dass sich bei der Abbildung die Bild-, Objektiv- und Schärfeebene in einer gemeinsamen Schnittgeraden schneiden.

Die optischen Achsen von Strahlungsthermometer 8 und Triangulationssensor 2 sind dabei bevorzugt parallel zueinander ausgerichtet und haben in der dazu senkrecht erfolgenden radialen Translation r einen konstanten Versatz A, so dass leicht zueinander versetzte Punkte auf der Oberfläche des Objektes 4 vom Triangulationssensor bzw. Strahlungsthermometer 8 vermessen werden. Da der Versatz A konstant ist, kann dieser bei der Auswertung der gemessenen Daten herausgerechnet werden und somit einem Oberflächenpunkt des Objektes 4 eine Temperatur zugeordnet werden.

Der Temperaturbereich, in dem das Verfahren angewendet wird, erstreckt sich von Raumtemperatur bis 1000° C und darüber hinaus. Dabei tritt bereits eine beträchtliche Eigenstrahlung des keramischen oder pulvermetallurgischen Messobjektes 4 auf, deren Intensität aber durch die Laserintensität übertroffen wird.

Zur Erfassung eines Punktes auf der Oberfläche des keramischen oder pulvermetallurgischen Objektes 4 projiziert der Lasertriangulationssensor 2 einen Lichtpunkt auf die Oberfläche des keramischen Messobjektes 4 und bildet das (rück-)gestreute Licht über eine Optik in einem positionsempfindlichen Messelement oder Detektor 2b ab. Lichtquelle 2a und Detektor 2b sind in dem Triangulationssensor 2 integriert angeordnet.

Zur Erfassung der Oberflächengeometrie des keramischen oder pulvermetallurgischen Objektes 4 erfolgt die radiale Translation des außerhalb des Ofens befindlichen Lasertriangulationssensors 2 mit einer Mikropositioniereinheit 6, angeordnet über dem sehr schmalen geradlinigen Spalt 1 in der Ofendecke, in Richtung der Ausdehnung des Spaltes 1. Durch die lineare Translation des Lasertriangulationssensors 2, durch das Mittel zur linearen Positionierung 6, wird ein Höhenprofil des Messobjektes 4 in der Ebene, in der der Lichtstrahl der Lichtquelle 2a während der Translation verschoben wird, bestimmt.

Zur Erfassung eines gesamten dreidimensionalen Oberflächenprofils des keramischen oder pulvermetallurgischen Objektes 4 wird zudem gleichzeitig das Objekt winkelgenau rotiert. Dies geschieht mittels des unter dem Spalt oder Schlitz 1 angeordneten Drehtellers 3. Durch die Drehung des keramischen oder pulvermetallurgischen Messobjektes 4 entsteht aus den einzelnen Profilmessungen eine dreidimensionale Abbildung der Oberfläche der Messfläche. Dabei laufen die Bewegungen von radialer Positioniereinheit 6 und Rotation des Drehtellers synchronisiert ab.

Ohne Translation von Lichtquelle 2a, Detektor 2b und Strahlungsthermometer 8 sowie Rotation des Objektes 4 wird nur ein Punkt der Oberfläche "gescannt". Für manche Anwendungen kann schon die Aufnahme eines Teilprofils oder eines Teilbereiches der Oberfläche oder des Oberflächenprofils des Objektes 4 ausreichend sein, z.B. in einem für die Funktion des zu formenden Werkstückes kritischen Bereich oder am Ort einer Sollbruchstelle. Die erfindungsgemäße Erfassung eines Teilprofils der Oberfläche unterscheidet sich von bisher üblichen Schattenrissverfahren dadurch, dass direkt von der Probe gestreutes Licht verwendet wird. Dies erlaubt die Messung von Oberflächenprofilen auch in Bereichen, die nicht hinreichend durch den Schattenriss erfassbar sind, wie z.B. die Oberfläche nicht vollständig konvex geformter oder quaderförmiger Objekte oder die Erfassung komplexer Verwerfungen sinternder keramischer Folien. Für andere Anwendungen muss das gesamte Werkstück 4 während des Sinterns untersucht werden.

Ein vorteilhafter Effekt der Rotation des Drehtellers 3 ist die Kompensation von Temperaturunterschieden im keramischen oder pulvermetallurgischen Messobjekt 4, die durch Temperaturgradienten im Innenraum des Ofens 5 hervorgerufen werden.

Bevorzugt wird das keramische oder pulvermetallurgische Objekt 4 auf dem Drehteller 3 mit konstanter Winkelgeschwindigkeit gedreht, wobei der Triangulationssensor 2 kontinuierlich oder in kleinen diskreten Schritten Punkte auf der Oberfläche des keramischen Objektes 4 trianguliert. Gleichzeitig wird die Temperatur der Oberfläche des keramischen Objektes 4 durch das Strahlungsthermometer 8 gemessen. Nach einem Umlauf wird die radiale Positioniereinheit 6 um ein Inkrement radial verschoben, wodurch eine neue Bahn auf der Oberfläche des keramischen Objektes 4 von Strahlungsthermometer 8 und Triangulationssensor 2 vermessen wird. Radial wird der Triangulationssensor 2 vom Rand des keramischen Objektes 4 zum Rotationsmittelpunkt des Drehtellers 3 verschoben, wodurch die Oberfläche einmal vollständig vermessen wird.

Bevorzugt startet die radiale Translation und Vermessung am Rand des Drehtellers 3 oder zumindest vom Rand der Probe 4 auf dem Drehteller 3, damit die Nulllage des Drehtellers 3 immer wieder neu bestimmt werden kann. Die gemessenen geometrischen Daten des keramischen oder pulvermetallurgischen Messobjektes und der nicht durch das Messobjekt verdeckten Fläche des Drehtisches werden bevorzugt zunächst in Zylinderkoordinaten r, phi, z angegeben, wobei der Radius r und der Azimutwinkel phi die Koordinaten eines Punktes in einer Ebene (Polarkoordinaten) beschreiben und z die dazugehörige Höhe des Punktes senkrecht über oder unter der Ebene des Polarkoordinatensystems. Nach einer Koordinatentransformation bezieht sich die z-Koordinate des Messobjektes stets auf die Drehtischoberfläche (z = 0). Die thermische Ausdehnung des Drehtisches ist somit in z-Richtung messtechnisch kompensiert.

Mit dem außerhalb des Ofens 5 über dem sehr schmalen geradlinigen Spalt 1 in der Ofendecke angeordneten optischen Pyrometer 8 wird das Temperaturprofil des auf dem Drehtisch 3 befindlichen keramischen oder pulvermetallurgischen Messobjektes 4 gemessen. Das optische Pyrometer 8 wird bevorzugt über dem Spalt 1 fest in Reihe zum Lasertriangulationssensor 2 an der gleichen Mikropositioniereinheit 6 angeordnet. Nach Herausrechnung des Abstands zwischen Triangulationssensor 2 und Pyrometer 8 ergibt sich für jeden Oberflächenpunkt P[r, phi, z] ein korrespondierender Temperaturwert T(r, phi, z). Damit ist die Objektoberfläche geometrisch und thermisch komplett beschrieben.

Das keramische oder pulvermetallurgische Messobjekt 4 wird während der kontinuierlichen Translationsbewegung des Sensors 2 und der Rotation des Drehtisches 3 gescannt. Vorteilhaft sind eine zusammengesetzte spiralförmige Bewegung oder eine Kreisbewegung mit einem Translationsschritt nach jeder Umdrehung. Aus einer vollständigen Abtastung der Objektoberfläche, zum Beispiel nach dem Durchlauf einer kompletten Spirale vom einem äußeren Punkt auf dem Drehtisch 3 bis zu seinem Rotationsmittelpunkt, wird die Oberfläche des Objekts im Rahmen der Schrittweiten von Translation und Rotation in einer Steuer- und Auswerteinheit berechnet.

Aus zeitlich nacheinander bestimmten Oberflächen oder auch Einzelmaßen, wie zum Beispiel eine Kantenlänge eines Bauteils, werden geometrische Änderungen des keramischen oder pulvermetallurgischen Messobjekts 4 bestimmt. Darunter sind Deformationen und Verwerfungen des Objekts sowie normale, für die Sinterung typische Schwindungen oder Schrumpfungen zu verstehen.

Natürlich kann auch zunächst eine Translationsbewegung über die Länge des Spalts vollständig durchgeführt werden, wodurch ein Schnitt des keramischen oder pulvermetallurgischen Objektes 4 gescannt wird, dem sich eine inkrementelle Winkeländerung und eine erneute Translation anschließen, solange bis die Oberfläche vollständig abgetastet wurde.

Die Oberfläche des keramischen oder pulvermetallurgischen Objektes 4 wird kontinuierlich während des Sinterns durch den Triangulationssensor 2 und das Strahlungsthermometer 8 gescannt, womit eine Veränderung der Oberfläche während des Sinterns 4 festgestellt werden kann.

Im folgenden wird beschrieben, wie die Schwindung während des Sinterns am Beispiel einer keramischen Folie berechnet werden kann. Dabei kommen dünne Keramikfolien im Format 8"x8" bevorzugt zum Einsatz. Jedoch ist die Vorrichtung nicht auf die Verwendung von Folien beschränkt, sondern es können vielmehr alle möglichen Formen und Größen, die der Ofen 5 aufnehmen kann, verwendet werden.

Wie in Fig.2 gezeigt, wird eine laterale Schwindung des keramischen Objektes 4 aus der Verfolgung und Abstandsbestimmung zwischen speziellen Punkten des keramischen Messobjektes P(r, phi), zum Beispiel Ecken und Randpunkte, bei denen sich die z-Koordinate sprunghaft ändert, bestimmt. Bei rechteckigen keramischen Folien lässt sich mit einem einzigen kreisförmigen Umlauf, wobei der Sensor alle Folienränder detektieren muss, ein umschreibendes Viereck berechnen. Aus zeitlich nacheinander erfolgten Berechnungen des umschreibenden Vierecks wird die laterale Schwindung der Folie bestimmt.

Die Ränder der keramischen Folie 4 stellen sich beim Messprozess mit dem Lasertriangulationssensor 2 als Sprung im Messsignal dar. Wenn man bei einer kreisförmigen Abtastung einer Folie 4 mit geradlinigen Rändern pro Folienseite zwei Sprünge detektiert, kann man daraus das umschreibende Viereck und seine Eckpunkte bestimmen. Aus dem Abstand benachbarter Eckpunkte des berechneten umschreibenden Vierecks folgen die Seitenlängen der keramischen Folie 4. Auch kann man bei der kreisförmigen Abtastung gleich einen Eckpunkt erfassen, was aber auf Grund diskreter Kreisradien bei der Messung schwierig ist. Der Punkt RM in Fig. 2 gibt den Rotationsmittelpunkt des Drehtisches an. Die laterale Schwindung zwischen zwei Zeitpunkten 1 und 2 berechnet sich dann beispielsweise aus der Änderung einer Seitenlänge der Folie:

$$s_{lateral} = (L_1 - L_2)/ \, L_1 \, .$$

Wenn der Zeitpunkt 1 der Startpunkt und der Zeitpunkt 2 das Ende des Sinterprozesses sind, ist $s_{lateral}$ folglich die laterale Gesamtschwindung der Folie 4.

Vorteilhafterweise ist die Bestimmung der lateralen Schwindung von Folien 4 bei nur einem Umlauf des Drehtellers 3 besonders schnell.

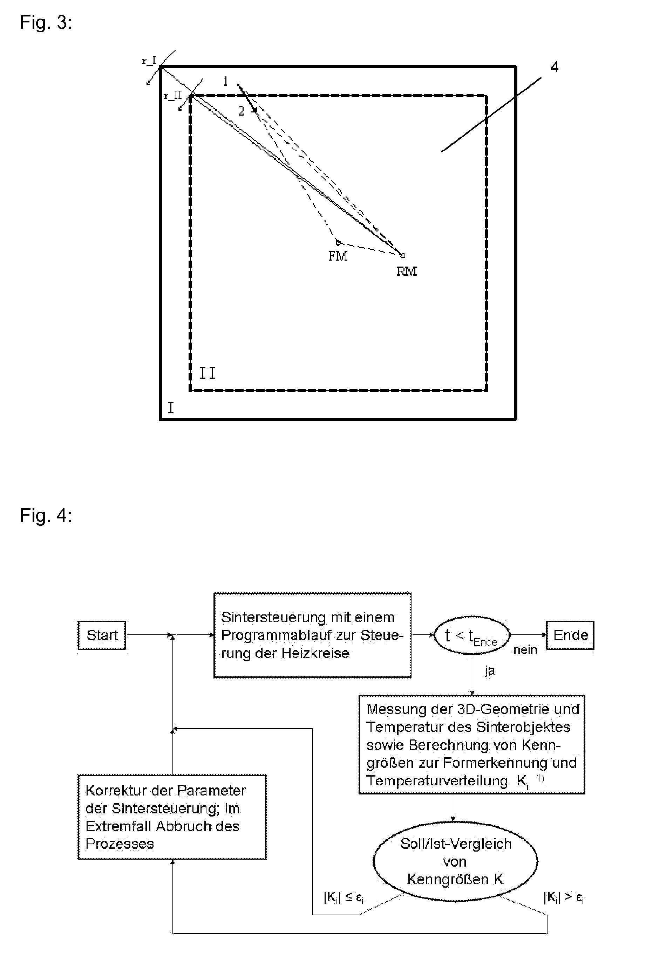

Die axiale Schwindung in Dickenrichtung der Folie wird aus der Messung der z-Koordinaten von fest mit der Folienoberfläche verbundenen Kontrollpunkten bestimmt, wie in Fig. 3 gezeigt. Der Begriff "axial" bezieht sich auf die Drehachse, um die das Objekt rotiert wird. Die r-phi-Koordinaten dieser ausgewählten Punkte müssen mit der lateralen Schwindung iterativ nachgeführt werden. Aus zeitlich nacheinander bestimmten z-Werten der numerierten Folienpunkte wird die axiale Schwindung bestimmt. Axial bedeutet hier die Schwindung in Richtung der Drehachse des Drehtellers 3, also die Schwindung des Objektes 4 in z-Richtung oder in seiner Dicke.

Bei der lateralen Schwindung, also in x- oder y-Richtung, der keramischen Folie 4 "wandert" ein auf der Folie fest verankerter Punkt unter bestimmten Annahmen im Koordinatensystem des Drehtisches 3 von Position 1 nach Position 2 (bei isotroper Schwindung entlang eines Strahls vom Folienmittelpunkt). Da der Punkt nicht "gesehen" wird, muss seine Position aus der lateralen Schwindung berechnet werden. Diese Position muss mit Sensortranslation und Winkelstellung des Drehtischs realisiert werden. Für die axiale Schwindung wird bei jeder neuen Punktposition mit dem Lasertriangulationssensor der Abstand, also die z-Koordinate, gemessen.

Die Markierung I und II in Fig. 3 symbolisieren dabei die Foliengröße zu zwei aufeinander folgenden Zeitpunkten. Der Punkt FM ist der Mittelpunkt der rechteckigen Folie 4, der Punkt RM gibt den Rotationsmittelpunkt des Drehtisches 3 an. Mit $r_I$ und $r_{II}$ werden unterschiedliche Kreisbahnen bei der Messung angedeutet, bei denen Eckpunkte oder Folienränder detektiert werden. Die axiale Schwindung zwischen zwei Zeitpunkten 1 und 2 berechnet sich aus der Änderung eines vertikalen Abstandsmaßes (Höhe, Dicke) - also der z-Koordinate eines festen Punktes auf der Folie:

$$s_{axial} = (z_1 - z_2)/\ z_1.$$

Wenn der Zeitpunkt 1 der Startpunkt und der Zeitpunkt 2 das Ende des Sinterprozesses sind, ist $s_{axial}$ folglich die axiale Gesamtschwindung der keramischen Folie 4.

Fig. 2 und 3 zeigen die Bestimmung der lateralen und axialen Schwindung von keramischen Folien 4. Die Schwindungen können aber für jede beliebige Form des Objektes berechnet werden, Fig. 2 und 3 beziehen sich lediglich auf ein Ausführungsbeispiel.

Bei strukturierten keramischen Objekten 4, beispielsweise mit gedruckten Leiterbahnen und Löchern, lassen sich lokale, räumlich inhomogene Schwindungsprozesse anhand der Größe und Lage dieser Merkmale zueinander quantitativ erfassen.

In einem anderen nicht gezeigten Beispiel, das aber nicht zur Erfindung gehört, ist kein Mittel zur linearen Positionierung 6 vorgesehen. Stattdessen wird ein Lichtstrahl zu einer Linie aufgeweitet und auf das Objekt 4 gerichtet. Der aufgeweitete Lichtstrahl wird dann bevorzugt durch einen Laserlichtschnittsensor realisiert. Dabei ist vorteilhaft, dass der Laserstrahl beim Laserlichtschnittsensor zu einer Linie aufgeweitet wird und damit unmittelbar entlang dieser Linie das Profil bestimmt wird und somit eine nötige Translation von Lichtquelle 2a und Detektor 2b entfällt. Da aber das Laserlicht nur in der Ebene, die aus der optischen Achse der Laserprojektionseinheit und der optischen Achse der Kamera auf dem Kamerachip scharf abgebildet wird und auf Grund der Schärfentiefe und Linienbreite der Laserlinie zu den seitlichen Rändern in der Abbildung etwas an Schärfe verlieren kann, ergibt sich jedoch physikalisch eine geringere Auflösung gegenüber dem erfindungsgemäßen Lasertriangulationssensor. Ein Laserlichtschnittsensor kann aber beispielsweise dennoch angewendet werden bei Sinterobjekten mit einer ausgeprägten Höhe mit z.B. Länge, Breite und Höhe etwa in einer Größenordnung. Bei sehr dünnen Folien mit Foliendicken, die beispielsweise viel kleiner als Länge und Breite sind, ist hingegen die erfindungsgemäße Lasertriangulation bevorzugt.

In einem weiteren nicht gezeigten Ausführungsbeispiel kann das geometrische Oberflächenprofil mittels eines Streifenprojektionsverfahrens durchgeführt werden. Dabei wird in einem topometrischen Verfahren die Lichtquelle 2a durch einen Projektor als inverse Kamera realisiert und der Detektor 2b durch eine Kamera.

Dabei arbeitet der Projektor mit einer Leistung, die die vorhandene Strahlung der glühenden Oberfläche im Ofen 5 übertrifft. Für jede Kamera und Projektor wären jeweils eine Öffnung 1 im Ofen 5 erforderlich. Mit mehreren Kameras kann eine Stereoaufnahme der Oberfläche erfolgen. In einem weiteren bevorzugten Ausführungsbeispiel wird mittels der während des Sinterns kontinuierlich gemessenen geometrischen und/oder thermischen Daten der Oberfläche des Messobjektes durch den Triangulationssensor 2 bzw. das Strahlungsthermometer 8 der Sinterprozess gesteuert.

Die Steuerung der Sinterung kann dabei wie in Fig. 4 gezeigt ablaufen. Dabei werden bevorzugt verschiedene Heizzonen des Ofens 5 mittels separater Heizkreise separat oder gemeinsam gesteuert. Es kann aber auch allein die globale Temperatur im Ofen gesteuert werden.

Die Sinterung wird mit einer Steuerung der Sinterparameter durchgeführt. Die Sinterparameter umfassen dabei die lokale und globale Ofentemperatur, die Zeitdauer einzelner Sinterungsschritte sowie die lokale oder globale Heizrate $\Delta T/\Delta t$ im Ofen bzw. in Ofensegmenten oder Heizzonen, wobei $\Delta T$ die Änderung der Temperatur in einem Zeitintervall $\Delta t$ ist. Bei der Realisation der erfindungsgemäßen Vorrichtung mit Positioniereinheit 6 und Drehteller 3 können auch die Drehgeschwindigkeit des Drehtellers 3 und die Translationsgeschwindigkeit der Positioniereinheit 6 gesteuert werden. Ferner kann die Zeitdauer für einzelne Schritte der Sinterung oder die gesamte Sinterung gesteuert werden.

Erfindungsgemäß werden das geometrische und thermische Oberflächenprofil wenigstens eines Teilbereiches der Oberfläche des Objektes 4 zur Steuerung der Sinterung verwendet. Nach dem Einbringen des Objektes 4 in einen Hochtemperaturofen 5 wird der Ofen erhitzt. Es wird dann das dreidimensionale geometrische Oberflächenprofil mindestens eines Teilbereiches des Objektes 4 erstellt, wobei Licht einer Lichtquelle 2a einen Punkt auf der Oberfläche des Objektes bestrahlt, das gestreute Licht in einem Detektor 2b detektiert wird und daraus dann das geometrischen Oberflächenprofil bestimmt wird. Gleichzeitig wird das thermische Oberflächenprofil mindestens eines Teilbereiches des Objektes 4 mittels eines Strahlenthermometers 8 erstellt und diese Profile werden dann für die Steuerung der Sinterparameter eingesetzt.

Es wird dabei bevorzugt die komplette Oberfläche des keramischen Objektes 4 wie oben beschrieben kontinuierlich gescannt. Ist die vorgegebene Zeitdauer der Sinterung überschritten, wird der Prozess abgebrochen, sonst wird er weiter durchgeführt. Zur Kontrolle der Sinterung werden bevorzugt Kenngrößen zur Formerkennung und Temperaturverteilung des keramischen oder pulvermetallurgischen Objektes 4 während des Sinterprozesses festgelegt, die z. B. Schwindungsmaße, geometrische Abweichungen und Temperaturdifferenzen umfassen. Diese Kenngrößen zur Formerkennung und Temperaturverteilung werden aus den gemessenen Geometrien und Temperaturen des keramischen oder pulvermetallurgischen Objektes 4 bestimmt. Dies geschieht bevorzugt in der Steuer- und Auswerteeinheit 9. Beispielsweise kann die laterale Schwindung wie oben dargelegt bestimmt werden.

Es wird nach jeder Kenngrößenbestimmung ein Soll/Ist-Vergleich der gemessenen Werte mit vorbestimmten Werten durchgeführt. Die Parameter der Sintersteuerung werden dann korrigiert, wenn der Betrag der Abweichung der gemessenen Werte der Kenngrößen $K_i$ von den vorbestimmten Werten größer ist, als ein erster vordefinierten Schwellenwert $\varepsilon_i$ für diese Kenngröße. Die Bestimmung der Geometrien und Temperaturen des keramischen oder pulvermetallurgischen Objektes 4 zur neuen Bestimmung von Kenngrößen zur Formerkennung und Temperaturverteilung wird dann fortgeführt, wenn eine Abweichung der gemessenen Werte der Kenngrößen $K_i$ von den vorbestimmten Werten kleiner ist als der erste vordefinierten Schwellenwert oder eine Korrektur erfolgt ist und gleichzeitig der Sinterungsprozess noch nicht abgeschlossen ist. Wird zum Beispiel eine lokale Verwerfung erkannt, wird die Heizleistung eines oder mehrerer Heizzonen reduziert, das heißt die Heizrate $\Delta T/\Delta t$ verringert. Das gleiche trifft auch für Schwindungsmaße zwischen zwei aufeinander folgenden Messungen zu, die einen Schwellenwert übersteigen, oder der maximale Temperaturunterschied auf der Oberfläche ein zulässiges Maß überschreitet. Werden nachhaltig keine auffälligen Formänderungen oder Temperaturunterschiede festgestellt, können die Heizraten der einzelnen Heizzonen auch koordiniert erhöht werden.

Es kann auch ein zweiter Schwellenwert für die betreffende Kenngröße $K_i$ festgelegt werden, der größer ist als der erste Schwellenwert, bei dem bei Überschreiten des Schwellenwertes die Sinterung komplett abgebrochen wird. Das Sinterprogramm wird bei normalem Verlauf nach Ablauf der vorbestimmten Zeit beendet.

Mit der Oberflächentemperatur des keramischen oder pulvermetallurgischen Objektes 4, zum Beispiel repräsentiert durch die kleinsten und die größten Temperaturwerte auf dessen Oberfläche, den Schwindungsparametern und/oder Temperaturwerten von zusätzlich im Ofeninnenraum angeordneten Thermoelementen wird die Heizung des Ofens 5 bei laufendem Betrieb mit der Auswerte- und Steuereinheit 9 geregelt und optimiert.

Der Prozess ist besonders wichtig für den Ofentemperaturbereich, in dem die Schwindungsprozesse im wesentlichen stattfinden. Beispielsweise schwinden Glasmatrixkomposite, bestehend aus Bariumalumoborosilicatglas- und $\alpha$-Al$_2$O$_3$-Pulvern hauptsächlich im Temperaturbereich von 700 bis 900° C.

Da ein Temperaturprofil der Oberfläche des keramischen oder pulvermetallurgischen Objektes 4 nach der Erfindung gemessen werden kann, kann dieses Temperaturprofil zur lokalen Steuerung der Heizkreise verwendet werden, damit das keramische Objekt 4 möglichst gleichförmig gebrannt wird. So kann z.B. ein Temperaturunterschied im Ofen 5 durch die Steuer- und Auswerteeinheit 9 mit der Änderung der Heizraten ausgeglichen werden. Außerdem kann bei beginnenden Verwerfungen das Temperaturprofil im Ofen 5 angepasst werden.

Ferner können die gemessenen Daten auch zur Steuerung der Translationsgeschwindigkeit von Sensor 2 und Strahlungsthermometer 8 sowie zur Einstellung der Rotationsgeschwindigkeit des Drehtellers 3 verwendet werden. Zu Beginn der Messung mag eine langsamere Bewegung ausreichend sein und gar nötig sein, da das keramische Objekt 4 noch nicht hinreichend fest ist. Im weiteren Verlauf, im Temperaturbereich der Schwindung, kann dann eine schnellere Geschwindigkeit zur schnelleren Messung der Veränderungen notwendig sein.

Während des laufenden Sinterprozesses - also prozessintegriert bzw. in-situ unter Hochtemperaturbedingungen - werden erstmals mit optischen Sensoren aus dem direkt vom Objekt gestreuten Licht mit der erforderlichen Genauigkeit kontinuierlich und zeitaufgelöst Oberflächenprofile des Bauteils sowie seine Temperaturverteilung gemessen. Mit Kenngrößen, die aus diesen Messungen bestimmt werden, werden der Sinterprozess oder vorangegangene technologische Schritte gesteuert. Fehler, wie die Deformation des zu sinternden Teils, werden sofort erkannt. Neben der Überwachung und Regelung von Routineprozessen können mit dieser Lösung Herstellungs- und Sinterverfahren für neue Werkstoffe entwickelt und optimiert werden.

Mit der Aufzeichnung aller geometrischen und thermischen Oberflächenparameter können Sinterprozesse von keramischen oder pulvermetallurgischen Hochleistungsbauelementen verfolgt, analysiert und der Ablauf der Sinterung korrigiert sowie gegebenenfalls gezielte Änderungen am Layout dieser Baugruppen vorgenommen werden.

Das angegebene Verfahren und die Vorrichtung ermöglichen zum ersten Mal eine zeitlich aufgelöste Vermessung eines keramischen oder pulvermetallurgischen Objektes 4 in allen 3D-Koordinaten inklusive der Kombination mit der örtlich und zeitlich aufgelösten Temperaturverteilung. Das trifft auch für die aus der kompletten Messung abgeleiteten Schwindungsparameter zu. Durch diese Messung kann der Sintervorgang präzise gesteuert werden oder aber vor zu großer Verformung der Ausgangsmaterialien abgebrochen werden.

Auch die Anwendung einzelner Elemente des oben beschriebenen Ausführungsbeispiels kann wesentliche Vorteile bei der Steuerung von Sinterprozessen ermöglichen. So liefert bereits die Erfassung eines fest angeordneten Linienprofils währen des Sintervorgangs wesentliche Informationen zum Sinterprozess, wie zum Beispiel die Folienbreite oder Anzeichen einer beginnenden Verwerfung, In diesem Fall kann auf die Verwendung einer rotierenden Probenaufnahme verzichtet werden. Ähnliches gilt für die Verwendung des Pyrometers. Das Linienprofil kann auch auf bestimmte kritische oder repräsentative Bereich des Objektes beschränkt werden. Derartig eingeschränkte Varianten des beschriebenen Verfahrens liefern zwar nur eingeschränkte Informationen, bieten aber dafür den Vorteil einer einfacheren Realisierbarkeit unter großtechnischen Bedingungen und geringere Kosten.

Bezugszeichenliste

| | |
|---|---|
| 1 | Öffnung |
| 2 | Mittel zur Bestimmung des dreidimensionalen geometrischen Oberflächenprofils |
| 2a | Lichtquelle |
| 2b | Detektor |
| 3 | Drehteller |
| 4 | Probe |
| 5 | Hochtemperaturofen |
| 6 | Positioniereinheit zur Translation der Sensoren über dem Spalt |
| 7 | Antrieb für Drehteller mit genauer Winkelpositionierung |
| 8 | Mittel zur Bestimmung des thermischen Oberflächenprofils |
| 9 | Steuer- und Auswerteeinheit |
| 102a | Lichtquelle |
| 102b | Detektor |
| 104 | Probe |
| 105 | Messergebnis |
| RM | Rotationsmittelpunkt |
| FM | Folienmittelpunkt |

**Patentansprüche**

1. Verfahren zur Sinterung eines Objektes (4), umfassend die Schritte:

   - Einbringen des Objektes (4) in einen Hochtemperaturofen (5);
   - Erhitzen des Hochtemperaturofens (5) und Sintern des Objektes im Hochtemperaturofen (5);
   - während des Sinterns, Erstellen eines geometrischen Oberflächenprofils mindestens eines Teilbereiches des Objektes (4) mittels:
   - Bestrahlen des Objektes (4) mit Licht einer Lichtquelle (2a); und
   - Detektieren des vom Objekt (4) gestreuten Lichtes mit einem Detektor (2b); und
   - Bestimmen des geometrischen Oberflächenprofils aus dem detektierten Licht, wobei Lichtquelle (2a) und Detektor (2b) über das Objekt bewegt werden und Lichtquelle (2a) und Detektor (2b) durch einen Lasertriangulationssensor (2) realisiert sind, der Laserlicht durch eine Öffnung des Hochtemperaturofens (5) auf die Oberfläche des Objektes (4) abbildet und das am Objekt gestreute Laserlicht durch dieselbe Öffnung des Hochtemperaturofens (5) in einem positionsempfindlichen Detektor (2b) detektiert.

2. Verfahren nach Anspruch 1, ferner umfassend den Schritt der Steuerung der Sinterparameter auf Basis der erhaltenen geometrischen Oberflächenprofile des Objektes (4).

3. Verfahren nach Anspruch 1 oder 2, ferner umfassend den Schritt: Bestimmen des thermischen Oberflächenprofils mindestens eines Teilbereiches des Objektes (4) während des Erstellens des geometrischen Oberflächenprofils.

4. Verfahren nach Anspruch 3, ferner umfassend den Schritt der Steuerung der Sinterparameter auf Basis der erhaltenen geometrischen und/oder thermischen Oberflächenprofile des Objektes (4).

5. Verfahren nach einem der vorhergehenden Ansprüche, wobei die Bestimmung des thermischen Oberflächenprofils mittels eines Strahlenthermometers (8) erfolgt.

6. Verfahren nach Anspruch 2 oder 4, wobei die Menge der Sinterparameter die lokale und globale Temperatur im Ofen (5), die globale Heizrate im gesamten Ofen (5), die lokale Heizrate einzelner Heizzonen im Ofen (5) und die Zeitdauer einzelner Sinterungsschritte umfasst.

7. Verfahren nach einem der vorhergehenden Ansprüche,
wobei eine Steuer- und Auswerteeinheit (9) aus den gemessenen geometrischen und/oder thermischen Daten das geometrische und/oder thermische Oberflächenprofil des Objektes (4) berechnet.

8. Verfahren nach einem der vorhergehenden Ansprüche, wobei zwischen aufeinander folgenden Bestimmungen des geometrischen und/oder thermischen Oberflächenprofils mindestens eines Teilbereiches des Objektes (4) Veränderungen zwischen den Oberflächenprofilen bestimmt werden, auf deren Basis Sinterparameter gesteuert werden.

9. Verfahren nach einem der vorhergehenden Ansprüche, ferner umfassend:

   - Bestimmung von Kenngrößen (Ki) zur Formerkennung und Temperaturverteilung aus den gemessenen geometrischen und thermischen Oberflächenprofilen des Objektes (4),
   - Durchführung eines Soll/Ist-Vergleiches der gemessenen Werte der Kenngrößen ($K_i$) mit vorbestimmten Werten;
   - Korrektur der Sinterparameter, wenn eine Abweichung der gemessenen Werte der Kenngrößen ($K_i$) von vorbestimmten Werten größer ist als ein erster vordefinierten Schwellenwert (si):
   - Fortführung der Bestimmung der geometrischen und thermischen Oberflächenprofile des Objektes (4) und der Kenngrößen (Ki), solange der Sinterungsprozess noch nicht abgeschlossen ist, und
   - Abbruch des Sintervorganges bei einer Abweichung der gemessenen Werte der Kenngrößen ($K_i$) von vorbestimmten Werten, die größer ist als ein zweiter vordefinierter Schwellenwert.

10. Verfahren nach einem der vorhergehenden Ansprüche, wobei der Winkel zwischen Lichtquelle (2a) und Detektor (2b) konstant ist.

11. Verfahren nach einem der vorhergehenden Ansprüche, wobei Strahlungsthermometer (8) sowie Lichtquelle (2a) und Detektor (2b) zusammen über das Objekt bewegt werden.

12. Verfahren nach einem der vorhergehenden Ansprüche derart, dass

   - das Erstellen des geometrischen und des thermischen Oberflächenprofils durch einen Spalt (1) in der Wandung des Ofens (5) erfolgt;
   - Strahlungsthermometer (8), Lichtquelle (2a) und Detektor (2b) in lateraler Richtung entlang des Spaltes (1) über das Objekt (4) geführt werden;
   - gleichzeitig das Objekt (4) im Ofen (5) gedreht wird; und
   - lineare und rotierende Bewegung synchronisiert erfolgen.

13. Vorrichtung zur Sinterung eines Objektes (4), umfassend:

   einen Hochtemperaturofen (5), in dem das Objekt (4) aufgenommen und erhitzt wird,
   eine Öffnung (1) in der Wandung des Ofens (5);
   eine Lichtquelle (2a); und
   einen Detektor (2b) zur Erfassung des vom Objekt gestreuten Lichtes der Lichtquelle (2a),
   wobei
   Lichtquelle (2a) und Detektor (2b) auf derselben Seite des Objektes (4) angeordnet sind, dass durch die Öffnung (1) das Oberflächenprofil mindestens eines Teilbereiches des Objektes (4) auf Basis des von dem Objekt (4) gestreuten Lichtes bestimmbar ist,
   Lichtquelle (2a) und Detektor (2b) über das Objekt bewegbar ausgebildet sind, und
   Lichtquelle (2a) und Detektor (2b) durch einen Lasertriangulationssensor (2) realisiert sind, der Laserlicht durch die Öffnung (1) des Hochtemperaturofens (5) auf die Oberfläche des Objektes (4) abbildet und das am Objekt gestreute Laserlicht durch dieselbe Öffnung (1) des Hochtemperaturofens (5) in einem positionsempfindlichen Detektor (2b) detektiert.

14. Vorrichtung nach Anspruch 13, wobei nur genau eine Öffnung (1) in einer Wandung des Ofens (5) vorhanden ist, oberhalb derer Lichtquelle (2a) und Detektor (2b) angeordnet sind.

15. Vorrichtung nach Anspruch 13, ferner umfassend ein Mittel (8) zur Bestimmung des thermischen Oberflächenprofils mindestens eines Teilbereiches des Objektes (4) im Ofen (5).

16. Vorrichtung nach Anspruch 15, ferner umfassend eine Auswerte- und Steuereinheit (9) zur Auswertung der gemessenen thermischen und/oder geometrischen Daten.

17. Vorrichtung nach Anspruch 16, wobei die Auswerte- und Steuereinheit (9) zur Steuerung von Sinterparametern auf Basis dieser Daten ausgebildet ist.

18. Vorrichtung nach Anspruch 17, wobei die Menge der steuerbaren Sinterparameter:

die lokale und globale Temperatur im Ofen (5), die globale Heizrate im gesamten Ofen (5), die lokale Heizrate einzelner Heizzonen im Ofen (5), und die Zeitdauer einzelner Sinterungsschritte umfasst.

19. Vorrichtung nach einem der vorhergehenden Vorrichtungsansprüche, wobei der Winkel zwischen Lichtstrahl der Lichtquelle (2a) und optischer Achse des Lichtdetektors (2b) konstant ist.

20. Vorrichtung nach einem der vorhergehenden Vorrichtungsansprüche, wobei die Öffnung (1) ein Spalt ist;
Strahlungsthermometer (8), Lichtquelle (2a) und Detektor (2b) an einem Mittel zur linearen Positionierung (6) entlang des Spaltes verschiebbar angeordnet sind;
im Ofen (5) ein Mittel zur Rotation des Objektes (3) derart ausgebildet ist, dass die Bewegung von Mittel zur linearen Positionierung (6) und Mittel zur Rotation des Objektes (3) synchronisiert erfolgen.

**Claims**

1. A method for sintering an object (4) comprising the steps:

   - introducing the object (4) into a high-temperature furnace (5);
   - heating the high-temperature furnace (5) and sintering the object in the high-temperature furnace (5);
   - during the sintering, creating a geometric surface profile of at least a subregion of the object (4) by means of:
   - irradiating the object (4) with light of a light source (2a); and
   - detecting the light scattered by the object (4) by means of a detector (2b); and
   - determining the geometric surface profile from the detected light, wherein the light source (2a) and detector (2b) are moved over the object and light source (2a) and detector (2b) are implemented by a laser triangulation sensor (2), which images laser light through an opening of the high-temperature furnace (5) onto the surface of the object (4) and detects the laser light scattered by the object through this same opening of the high-temperature furnace (5) in a position-sensitive detector (2b).

2. The method according to claim 1, further comprising the step of controlling the sintering parameters on the basis of the geometric surface profiles of the object (4) which are obtained.

3. The method according to claim 1 or 2, further comprising the step: determining the thermal surface profile of at least one subregion of the object (4) during the creation of the geometric surface profile.

4. The method according to claim 3, further comprising the step of controlling the sintering parameters on the basis of the geometric and/or thermal surface profiles of the object (4) which are obtained.

5. The method according to any one of the preceding claims, wherein the determination of the thermal surface profile is made by means of a radiation thermometer (8).

6. The method according to claim 2 or 4, wherein the set of sintering parameters comprise the local and thermal temperature in the furnace (5), the global heating rate in the entire furnace (5), the local heating rate of individual heating zones in the furnace (5) and the duration of individual sintering steps.

7. The method according to any one of the preceding claims,
wherein a control and evaluation unit (9) calculates the geometric and/or thermal surface profile of the object (4) from the measured geometric and/or thermal data.

8. The method according to any one of the preceding claims, wherein changes between the surface profiles are determined between successive determinations of the geometric and/or thermal surface profile of at least one subregion of the object (4), on the basis of which sintering parameters are controlled.

9. The method according to any one of the preceding claims, further comprising:

   - determining characteristic quantities (Ki) for shape recognition and temperature distribution from the measured geometric and thermal surface profiles of the object (4),
   - making a desired/actual comparison of the measured values of the characteristic quantities $(K_i)$ with predetermined values;
   - correcting the sintering parameters when a deviation of the measured values of the characteristic quantities $(K_i)$ from predetermined values is greater than a first predefined threshold value (si):
   - continuing the determination of the geometric and thermal surface profiles of the object (4) and the characteristic quantities (Ki) as long as the sintering process is not yet completed, and
   - interrupting the sintering process in the event of a deviation of the measured values of the characteristic quantities $(K_i)$ from predeter-

mined values which is greater than a second predefined threshold value.

10. The method according to any one of the preceding claims, wherein the angle between light source (2a) and detector (2b) is constant.

11. The method according to any one of the preceding claims,
wherein radiation thermometer (8) as well as light source (2a) and detector (2b) together are moved over the object.

12. The method according to any one of the preceding claims, in such a manner that

- the creation of the geometric and thermal surface profile is made through a gap (1) in the wall of the furnace (5);
- radiation thermometer (8), light source (2a) and detector (2b) are guided in a lateral direction along the gap (1) over the object (4);
- at the same time the object (4) is rotated in the furnace (5); and
- linear and rotating movements are performed synchronously.

13. A device for sintering an object (4), comprising:

a high temperature furnace (5), in which the object (4) is held and heated,
an opening (1) in the wall of the furnace (5);
a light source (2a) ; and
a detector (2b) for detecting the light from the light source (2a) scattered by the object, wherein
the light source (2a) and detector (2b) are arranged on the same side of the object (4) such that the surface profile at least of a subregion of the object (4) can be determined through the opening (1) on the basis of the light scattered by the object (4),
light source (2a) and detector (2b) are configured to be movable over the object, and
light source (2a) and detector (2b) are implemented by a laser triangulation sensor (2), which images laser light onto the surface of the object (4) through the opening (1) of the high-temperature furnace (5), and
detects the laser light scattered by the object in a position sensitive detector (2b) through the same opening (1) of the high temperature furnace (5).

14. The device according to claim 13, wherein only precisely one opening (1) is present in a wall of the furnace (5) above which the light source (2a) and detector (2b) are arranged.

15. The device according to claim 13, further comprising a means (8) for determining the thermal surface profile at least of a subregion of the object (4) in the furnace (5).

16. The device according to claim 15, further comprising an evaluation and control unit (9) for evaluating the measured thermal and/or geometric data.

17. The device according to claim 16, wherein the evaluation and control unit (9) is configured for controlling sintering parameters on the basis of these data.

18. The device according to claim 17, wherein the set of controllable sintering parameters comprises: the local and global temperature in the furnace (5), the global heating rate in the entire furnace (5), the local heating rate of individual heating zones in the furnace (5) and the duration of individual sintering steps.

19. The device according to any one of the preceding device claims, wherein the angle between the light beam from the light source (2a) and the optical axis of the light detector (2b) is constant.

20. The device according to any one of the preceding device claims, wherein the opening (1) is a gap;
the radiation thermometer (8), light source (2a) and detector (2b) are arranged displaceably on a means for linear positioning (6) along the gap; and
a means for rotating the object (4) is configured in the furnace (5) in such a manner that the movement of the means for linear positioning (6) and means for rotating the object (3) is performed synchronously.

**Revendications**

1. Procédé pour fritter un objet (4), comportant les étapes consistant à :

- amener l'objet (4) dans un four à haute température (5) ;
- chauffer le four à haute température (5) et fritter l'objet dans le four à haute température (5) ;
- pendant le frittage, régler le profil surfacique géométrique d'au moins une zone partielle de l'objet (4) grâce à :
- l'irradiation de l'objet (4) par la lumière d'une source de lumière (2a) ; et
- la détection de la lumière diffusée par l'objet (4) grâce à un détecteur (2b) ;
et
- déterminer le profil surfacique géométrique à partir de la lumière détectée, dans lequel la source de lumière (2a) et le détecteur (2b) sont déplacés au-dessus de l'objet et la source de lumière (2a) et le détecteur (2b)sont réalisés par un capteur de triangulation laser (2), qui projette la lumière laser par une ouverture du four à haute température (5) sur la surface de l'objet (4) et qui détecte la lumière laser diffusée sur l'objet par la même ouverture du four à haute température (5) dans un détecteur sensible à la position (2b).

2. Procédé selon la revendication 1, comportant en outre l'étape consistant à commander les paramètres de frittage en fonction des profils surfaciques géométriques obtenus de l'objet (4).

3. Procédé selon la revendication 1 ou 2, comportant en outre l'étape consistant à :

déterminer le profil surfacique thermique d'au moins une zone partielle de l'objet (4) pendant le réglage du profil surfacique géométrique.

4. Procédé selon la revendication 3, comportant en outre l'étape consistant à commander les paramètres de frittage en fonction des profils surfaciques géométriques et/ou thermiques obtenus de l'objet (4).

5. Procédé selon l'une des revendications précédentes, dans lequel la détermination du profil surfacique thermique est effectuée au moyen d'un thermomètre à rayonnement (8).

6. Procédé selon la revendication 2 ou 4, dans lequel la pluralité des paramètres de frittage comprend la température locale et globale dans le four (5), la vitesse de chauffage global dans l'ensemble du four (5), la vitesse de chauffage local des différentes zones de chauffage dans le four (5) et la durée des différentes étapes de frittage.

7. Procédé selon l'une des revendications précédentes, dans lequel une unité de commande et d'évaluation (9) calcule le profil surfacique géométrique et/ou thermique de l'objet (4) à partir des données géométriques et/ou thermiques mesurées.

8. Procédé selon l'une des revendications précédentes, dans lequel des modifications, sur la base desquelles des paramètres de frittage sont commandés, entre les profils surfaciques sont déterminées entre les déterminations successives du profil surfacique géométrique et/ou thermique d'au moins une zone partielle de l'objet (4).

9. Procédé selon l'une des revendications précédentes, comportant en outre :

- la détermination de caractéristiques (Ki) pour la reconnaissance de forme et la répartition de température à partir des profils surfaciques géométriques et thermiques mesurés de l'objet (4),
- l'exécution d'une comparaison entre valeur de consigne/valeur réelle des valeurs mesurées des caractéristiques ($K_i$) par rapport à des valeurs prédéterminées ;
- la correction des paramètres de frittage, lorsqu'un écart des valeurs mesurées des caractéristiques ($K_i$) par rapport aux valeurs prédéterminées est supérieur à une première valeur de seuil prédéterminée (si) ;
- la continuité de la détermination des profils surfaciques géométriques et thermiques de l'objet (4) et des caractéristiques (Ki), tant que le processus de frittage n'est pas terminé, et
- l'interruption du processus de frittage dans le cas d'un écart des valeurs mesurées des caractéristiques ($K_i$) par rapport aux valeurs prédéterminées, qui est supérieur à une seconde valeur de seuil prédéterminée.

10. Procédé selon l'une des revendications précédentes, dans lequel l'angle entre la source de lumière (2a) et le détecteur (2b) est constant.

11. Procédé selon l'une des revendications précédentes, dans lequel le thermomètre à rayonnement (8) ainsi que la source de lumière (2a) et le détecteur (2b) sont déplacés conjointement au-dessus de l'objet.

12. Procédé selon l'une des revendications précédentes de sorte que

- le réglage du profil surfacique géométrique et du profil surfacique ^ thermique est effectué par un entrefer (1) dans la paroi du four (5) ;
- le thermomètre à rayonnement (8), la source de lumière (2a) et le détecteur (2b) sont guidés dans une direction latérale le long de l'entrefer (1) au-dessus de l'objet (4) ;
- l'objet (4) est tourné simultanément dans le four (5) ; et
- des déplacements linéaires et rotatifs se produisent de manière synchronisée.

13. Dispositif pour fritter un objet (4), comportant:

un four à haute température (5), dans lequel l'objet (4) est amené et chauffé,
une ouverture (1) dans la paroi du four (5) ;
une source de lumière (2a) ; et
un détecteur (2b) pour détecter la lumière de la source de lumière (2a) renvoyée par l'objet, dans lequel la source de lumière (2a) et le détecteur (2b) sont disposés sur le même côté de l'objet (4) de sorte que le profil surfacique d'au moins une zone partielle de l'objet (4) peut être déterminé par l'ouverture (1) en fonction de la lumière diffusée par l'objet (4),
la source de lumière (2a) et le détecteur (2b) sont réalisés mobiles au-dessus de l'objet, et
la source de lumière (2a) et le détecteur (2b) sont réalisés par un capteur de triangulation laser (2), qui projette la lumière laser par l'ouverture (1) du four à haute température (5) sur la surface de l'objet (4) et qui détecte une lumière laser diffusée par l'objet par cette ouverture (1) du four à haute température (5) dans un détecteur sensible à la position (2b).

14. Dispositif selon la revendication 13, dans lequel uniquement une ouverture (1) dans une paroi du four (5) est prévue, au-dessus de laquelle sont disposés la source de lumière (2a) et le détecteur (2b).

15. Dispositif selon la revendication 13, comportant en outre un moyen (8) pour déterminer le profil surfacique thermique d'au moins une zone partielle de l'objet (4) dans le four (5).

16. Dispositif selon la revendication 15, comportant en outre une unité d'évaluation et de commande (9) pour évaluer les données thermiques et/ou géométriques mesurées.

17. Dispositif selon la revendication 16, dans lequel l'unité d'évaluation et de commande (9) en vue de la commande des paramètres de frittage est réalisée en fonction de ces données.

18. Dispositif selon la revendication 17, dans lequel la pluralité des paramètres de frittage pouvant être commandés comporte la température locale et globale dans le four (5), la vitesse de chauffage globale dans l'ensemble du four (5), la vitesse de chauffage locale des différentes zones de chauffage dans le four (5), et la durée des différentes étapes de frittage.

19. Dispositif selon l'une des revendications précédentes concernant le dispositif, dans lequel l'angle entre le rayon lumineux de la source de lumière (2a) et l'axe optique du détecteur de lumière (2b) est constant.

20. Dispositif selon l'une des revendications précédentes concernant le dispositif, dans lequel l'ouverture (1) est un entrefer ;
le thermomètre à rayonnement (8), la source de lumière (2a) et le détecteur (2b) sont disposés de façon déplaçable sur un moyen par rapport à un positionnement linéaire (6) le long de l'entrefer; dans le four (5), un moyen pour la rotation de l'objet (4) est réalisé de sorte que le déplacement du moyen par rapport à un positionnement linéaire (6) et du moyen pour la rotation de l'objet (3) est effectué de manière synchronisée.

Fig. 1:

Fig. 2:

Fig. 3:

Fig. 4:

Fig. 5a:

102b

104

direktes
Licht

102a

Fig.5b:

105

Fig.6a:

104

gestreutes
Licht

102a    102b

Fig.6b:

105

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4588297 A
- JP 2001099615 A
- US 5270560 A
- DE 19504126 A1
- US 4339664 A
- EP 0506005 A2
- US 20050081602 A1
- GB 1228480 A
- JP 8297017 A
- DE 19542554 A1

**In der Beschreibung aufgeführte Nicht-Patentliteratur**

- **F. RAETHER ; R. SPRINGER ; S.BEYER.** Optical dilatometry for the control of microstructure development during sintering. *Mat Res Innovat,* 2001, vol. 4, 245-250